# EUROPEAN PATENT SPECIFICATION

(11) **EP 3 304 861 B1**
(45) Date of publication and mention of the grant of the patent: **11.09.2019**
(21) Application number: 15732547.3
(22) Date of filing: 28.05.2015
(51) Int. Cl.: H04L 29/08

(54) **INTERACTIVE METHOD AND SYSTEM FOR FILE TRANSFER**
INTERAKTIVES VERFAHREN UND SYSTEM FÜR DATEITRANSFER
PROCÉDÉ ET SYSTÈME INTERACTIF POUR TRANSFERT DE FICHIERS

(43) Date of publication of application: 11.04.2018
(73) Proprietor: Deutsche Telekom AG, 53113 Bonn (DE)
(72) Inventor: HUI, Pan, Hong Kong 999077 (CN); ZHANG, Wenxiao, Hong Kong 999077 (CN); LI, Weikai, Hong Kong 999077 (CN); PEYLO, Christoph, 49401 Damme (DE)
(74) Representative: Vossius & Partner Patentanwälte Rechtsanwälte mbB
(86) International application number: PCT/EP2015/061826
(87) International publication number: WO 2016/188581

(56) References cited:
- US-A1- 2012 124 481
- US-A1- 2013 222 227

## Description

### Field of the Invention

The present invention relates to an interactive method and system, more particularly to an interactive method and system for transferring files between two computational devices.

Nowadays, people frequently need to deliver files between two computational devices, for example to copy data from one computer to another, or to copy slides from user's device to the laptop which connects to the projector. Despite recent development in portable storage devices and network, to deliver files between two devices is still inconvenient, especially for the old age and childhood which may not able to use the devices and network method. Either to copy and paste files via storage devices, or to configure the network seem not available to them because of the complexity. Users who are familiar with computer also use tools like live chat application and cloud storage application to share files. However, when using traditional tools, it creates new problem that people may need access to the Internet, and have the same application installed on their devices.

Currently, most of smart phones and laptops can detect nearby devices and deliver files. People even try to reduce the complexity of this method by using multi-touch tabletops and surfaces. Users' computational devices are embedded into tablet on one table, and can deliver files by dragging towards direction of another tablet. However, there is still one requirement that users need to specific environment, such as to put two devices in grid in order to communicate.

To solve this problem, we present the invention, by using a camera of a mobile/portable smart device, to cause the smart device to recognize two computational devices, and instruct one computational device to deliver files to the other one. Meanwhile, the great computational resource has enabled augmented reality on mobile device which will highly improve user experience and attract user interest. When augmented reality element is blended, this operation difficulty on mobile devices will greatly decrease because users will be clearer about what happened to their computational device. Even the group who will never accept the traditional file-deliver method, will be willing to share their files to their friends. In one embodiment, the smart device selects a file (e.g. image file) on one computational device inside the view of the camera of the smart device. When finding a target computational device, the user of the smart device just needs to drag the file on the screen in such a manner that the file is transferred to an icon representing the target device, so that the file is actually transferred to the real target device.

US 2012/124 481 A1 refers to a method for communicating with a device including configuring a sensor to detect the device and a user interacting with the device through at least one gesture, identifying the device with a computing machine, and initiating a file transfer between the device and the computing machine in response to identifying the device and at least one of the gesture.

### Summary of the Invention

The object of the present invention is to provide an interactive method and an interactive system for transferring files.

According to an aspect of the present invention, a method of operating an interactive system to transfer files between two computational devices in a manner allowing a user to only use a smart device; the interactive system including:
a server which stores information of each of registered computational devices, including device ID and IP address, and, for each registered computational device that is configured to transmit files, a list of shareable files with their identifiers;
a smart device with a camera and a touch screen for receiving users' input, the smart device being connectable to the server, the smart device comprising an image-based recognition application; and
computational devices for storing and/or processing a file, wherein each registered computational device has a marking for image-based recognition indicating its device ID,
the method comprising:
   (a) operating the camera of the smart device to obtain at least one image of its environment to find marked computational devices;
   (b) operating the image-based recognition application of the smart device to recognize the registered computational devices inside a view of the camera to obtain device IDs by analyzing detected markings, and presenting a view of all the registered computational devices on the screen;
   (c) causing the touch screen of the smart device to receive a first touch signal from the user indicating a request to select one computational device as a sender device, and operating the smart device to send device ID of the sender device to the server for requesting a list of shareable files on that device;
   (d) operating the server, upon receipt of the request from the smart device, to send the list together with an identifier of each file listed to the smart device;
   (e) presenting a view of shareable files with icons in a manner so as to be associated with the selected computational device on the screen of the smart device;
   (f) causing the touch screen of the smart device to receive a second touch signal indicating which file the user intends to transfer, and receive a slide signal of dragging that icon to a computational device the user intends to transfer the file to as a receiver device;
   (g) operating the smart device to send a request comprising the device ID of the receiver device and a targeted file identifier to the server;
   (h) operating the server, upon receipt of the smart device's request to send IP address of the receiver device as well as the targeted file identifier to the sender device, and send IP address of the sender device to the receiver device; and
   (i) operating the sender device and the receiver device to build up a connection using the respectively received IP addresses and to transfer the file from the sender device to the receiver device.

According to another aspect of the present invention, an interactive system for transferring files between two computational devices in a manner allowing a user to only use a smart device, comprises:
a server adapted to store information of each of registered computational devices, including device ID and IP address, and, for each registered computational device that is configured to transmit files, a list of shareable files with their identifiers;
a smart device with a camera and a touch screen for receiving users' input, the smart device being connectable to the server, the smart device comprising an image-based recognition application; and
computational devices for processing a file, wherein each registered computational device has a marking for image-based recognition indicating its device ID,
wherein the smart device is adapted
   to obtain, with the camera, at least one image of its environment to find marked computational devices;
   to recognize, with the image-based recognition application, the registered computational devices inside a view of the camera to obtain device IDs by analyzing detected markings, and present a view of all the registered computational devices on the screen;
   to receive, via the touch screen, a first touch signal from the user indicating a request to select one computational device as a sender device; and
   to send device ID of the sender device to the server for requesting a list of shareable files on that device;
wherein the server is adapted, upon receipt of the request from the smart device, to send the list together with an identifier of each file listed to the smart device,
wherein the smart device is further adapted
   to present a view of shareable files with icons in a manner so as to be associated with the selected computational device on the screen;
   to receive, via the touch screen, a second touch signal indicating which file the user intends to transfer, and receive a slide signal of dragging that icon to a computational device the user intends to transfer the file to as a receiver device; and
   to send a request comprising the device ID of the receiver device and a targeted file identifier to the server,
wherein the server is further adapted, upon receipt of the smart device's request, to send IP address of the receiver device as well as the targeted file identifier to the sender device, and send IP address of the sender device to the receiver device, and
wherein the sender device and the receiver device are adapted to build up a connection using the respectively received IP addresses and to transfer the file from the sender device to the receiver device.

This invention mainly offers 2 advancements:
1) It greatly reduces the number of interaction procedures, decreases interaction complexity. Compared with traditional file transmission, no more hardware is required except a portable smart device (with camera and touch screen). Since users only need to touch on the screen of the smart device, it is also suitable for the group which are not familiar with computer, or not able to use removable storage.
2) It uses a simple touch and drag gesture input, users do not need any training before using it. And, preferably, after combined with augmented reality method, users can easily know what happened. It will attract more interaction, and offer users a clear demonstration.

### Brief Description of the Drawings

Other features and advantages of the present invention will become apparent in the following detailed description of the preferred embodiments with reference to the accompanying drawings, of which:
Fig. 1 is a schematic diagram illustrating an interactive system according to an embodiment of the present invention;
Fig. 2 is an exemplary display screen of a portable smart device, produced in response to a user's touch signal of selecting one computational device as a source device, showing available files for sharing on the screen around a source device icon;
Fig. 3 is a flow chart of an interactive method according to a preferred embodiment of the present invention, illustrating the steps in overall file selection and transfer (transmission) procedure;
Fig. 4 is a flow chart of the interactive method according to a preferred embodiment of the present invention, illustrating the steps in registering computational devices in a server;
Fig. 5 is a flow chart of the interactive method according to a preferred embodiment of the present invention, illustrating the steps in recognizing and presenting computational devices at the smart device;
Fig. 6 is a flow chart of the interactive method according to a preferred embodiment of the present invention, illustrating the steps in showing shareable files on one computational device; and
Fig. 7 is a flow chart of the interactive method according to a preferred embodiment of the present invention, illustrating the steps in transferring files between two computational devices.
Fig. 8 is a detailed explanation of components of a smart device shown in Fig. 1.
Fig. 9 is a detailed explanation of components of a server shown in Fig. 1.
Fig. 10 is a detailed explanation of components of a printer shown in Fig. 1.
Fig. 11 is a detailed explanation of components of a projector shown in Fig. 1.
Fig. 12 is a detailed explanation of components of a computer (e.g. laptop, desktop) shown in Fig. 1.

### Detailed Description of Preferred Embodiments

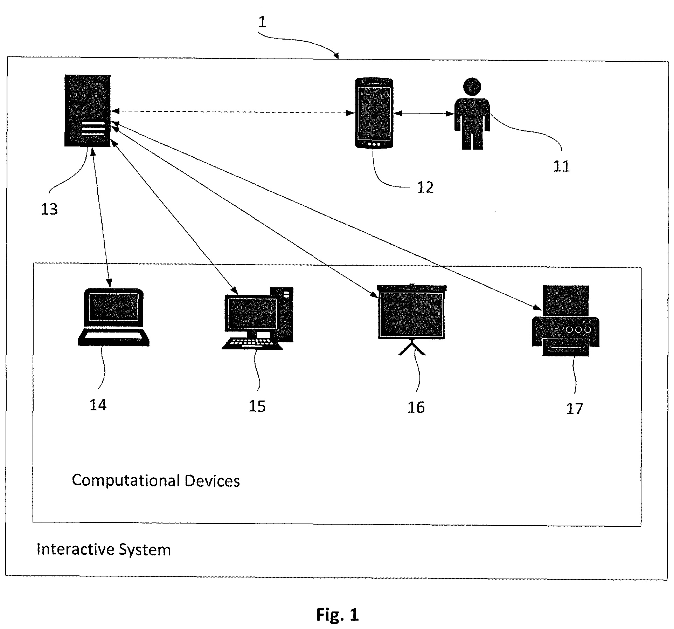

Referring to Fig. 1, a preferred embodiment of an interactive system 1 for transferring files according to the present invention will be explained. The interactive system 1 comprises a portable smart device 12 (e.g. smart phone, tablet, smart watch) equipped with a camera and a touch screen, a server 13, and at least two computational devices that are adapted to process (including storing) a file, like a laptop 14, a desktop 15, a projector 16 and a printer 17. In the present invention, the smart device is a computational device (e.g. smartphone such as iPhone ™) and covers any user device equipped with a camera and a touch screen.

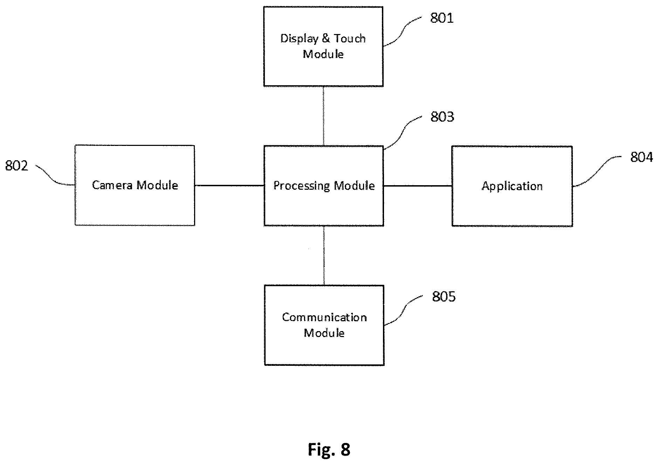

As illustrated in Fig. 8, the portable smart device 12 includes following functional components: a display & touch module 801 which shows information as well as receives user's touch signals; a camera module 802 which takes pictures; a processing module 803 which calculates and controls other modules; an application 804 which is a mobile software installed on the smart device 12 for this interactive system; a communication module 805 which transfers data from/to the server 13 via wireless network.

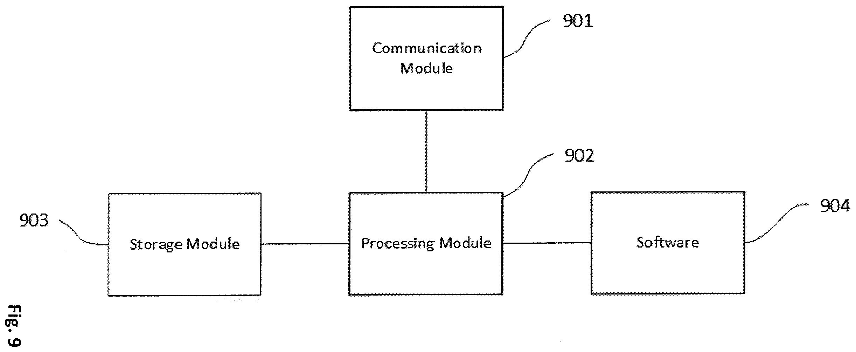

As illustrated in Fig. 9, the server 13 includes following functional components: a communication module 901 which transfers data from/to the portable smart device 12 and the computational devices; a processing module 902 which calculates and controls other modules; a storage module 903 which stores information of the portable smart device 12 and the computational devices; a software 904 which is a server software installed on the server 13 for this interactive system. It is to be noted that the server 13 may preferably be interactive with multiple portable smart devices, and computer devices associated with each of these smart devices.

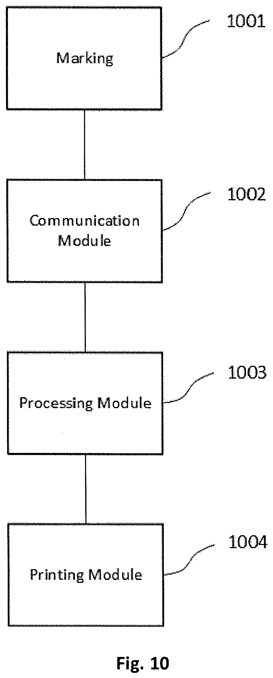

As illustrated in Fig. 10, the printer 17 includes following functional components: a marking 1001 (e.g. label, as will be explained below) which is used for image-based recognition; a communication module 1002 which transfers data from/to the server 13 and other computational devices; a processing module 1003 which calculates and controls other modules; a printing module 1004 which prints received files. For the interactive method, the printer 17 has been configured in advance to recognize other computational device(s) and accept files therefrom.

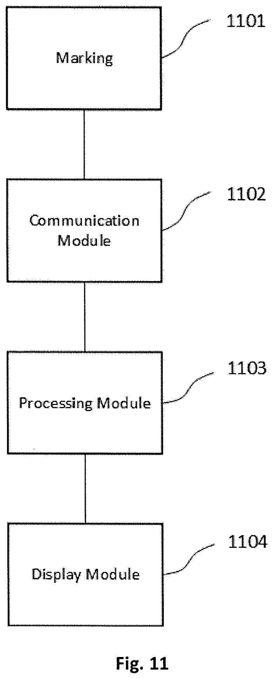

As illustrated in Fig. 11, the projector 16 includes following functional components: a marking 1101 (e.g. label) which is used for image-based recognition; a communication module 1102 which transfers data from/to the server 13 and other computational devices; a processing module 1103 which calculates and controls other modules; a display module 1104 which displays received files. For the interactive method, the projector 16 has been configured in advance to recognize other computational device(s) and accept files therefrom.

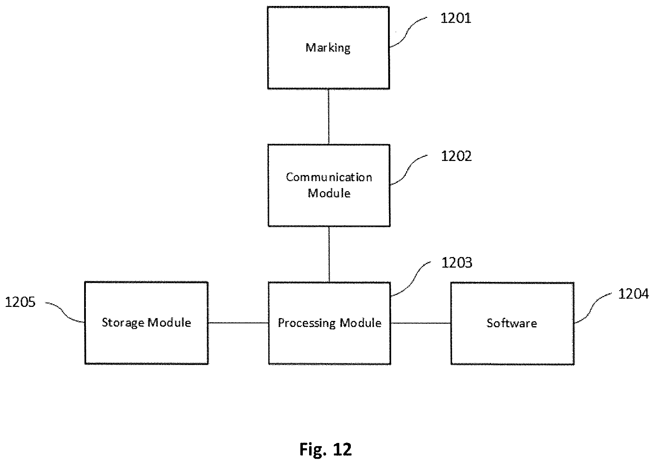

As illustrated in Fig. 12, the computer such as laptop 14, desktop 15 includes following functional components: a marking 1201 (e.g. label) which is used for image-based recognition; a communication module 1202 which transfers data from/to the server 13 and other computational devices; a processing module 1203 which calculates and controls other modules; a software 1204 installed on the computer for this interactive system; a storage module 1205 which stores files. For the interactive method, the computer has been configured in advance to recognize other computational device(s) and accept files therefrom.

Preferably, device ID of each computational device which is used in the present invention is stored in advance in the server 13.

In a registration procedure for enabling a subsequent file transfer, the computational device sends its device ID together with IP address of the computational device and information on shareable files on the computational device to the server 13. The server 13 manages at its storage module 903 a set of device ID and IP address of each computational device in a table. The registration procedure will be further described in detail below.

An image-based recognizable label indicating device ID is attached in advance on each computational device. The label is captured by the camera 802 of the smart device 12 in a recognition procedure of a computational device, as will be explained below.

As will also be explained in great detail below, the operation of the interactive system 1 starts at a user 11, who can be anyone that wants to transfer a file. User holds the portable smart device 12 and interacts with the smart device via touch or drag on the screen to select a source device, a file stored in the source device, and a destination device. The smart device sends its request to the server 13, and the server processes the request and controls the computational devices to finish the file transfer (transmission).

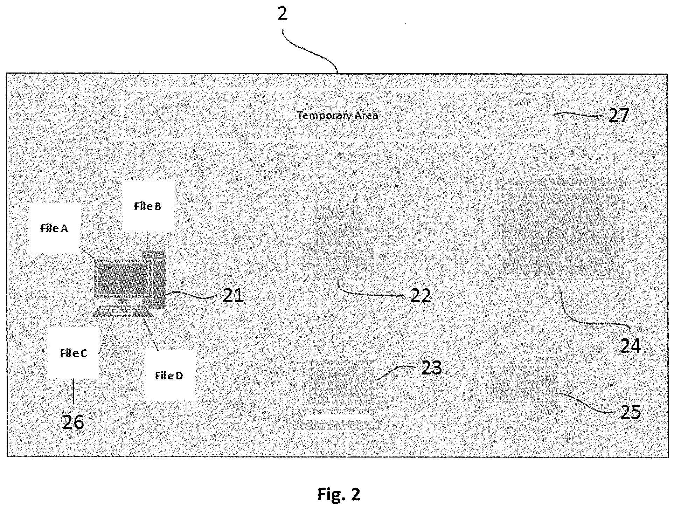

Referring to Fig. 2, an interface 2 of the program (application 804) running on the portable smart device is used for receiving user's input. The user opens the program, and the program uses the camera on the portable smart device to scan all the available computational devices, such as desktops, a printer, a laptop, and a printer for recognition of these devices in the server 13. By "scanning" the smart device 12 may obtain more than one images (shots) to cover all available computational devices since computational devices may not necessarily be located close to each other or small enough to be captured at the same time. As will be appreciated by those skilled in the art, the present invention is applicable to a case where computational devices are remotely located from each other (e.g. different rooms).

As will be appreciated by those skilled in the art, an image that was actually shot by the camera for the recognition procedure may be used for the subsequent procedures instead of icons. Then, file icons may be superimposed on such a frozen image. In case where two or more images are shot, they may be downscaled and displayed on the screen. For example, two images may be positioned next to each other with or without a space such as linear line, to enable transfer of a file from a computational device which appears on an image to a computational device which appears on an adjoining image.

Then the user can touch any of the computational devices on the screen, like a desktop icon 21. After an interaction between the server 13 and the smart device 12, which will be explained below, shareable files on the desktop show up around the corresponding desktop icon 21 in the form of icons 26, preferably with names of the files upon the icons.

User can drag any of the file icons to another computational device, and then the selected file is transferred to the selected destination device, together with a different command for each kind of further processing, such as storing, printing, and displaying. After the file transmission, functions of the receiver computational device are as follows: if the file icon is dragged to a printer icon 21, the printer will print the file under the construction of the printing command, which controls the printer to print the file by default settings; if the file icon is dragged to a projector icon 24, the projector will display the file under the construction of the displaying command, which controls the projector to display the file by default setting; if the file icon is dragged to a laptop icon 23 or a desktop icon 25, the file will be stored under the construction of the storing command, which controls the computer to store the file in a default directory (e.g. desktop (GUI) of the computer).

As will be appreciated by the skilled person, the processing (in particular, printing) may not be automatically started upon dragging, and the smart device 12 may allow user to configure settings, e.g. by displaying a pop-up window for such a configuration. For those who are not familiar with computer, the automatic starting would be however preferable.

User can also drag the file icon to a Temporary Area 27 of the screen (e.g. in the form of an empty bar on the top of the computational device icons). The Temporary Area stores information of the file (specifically a file identifier of the file, as will be described below). Later, user can drag the file icon from the Temporary Area 27 to a computational device to finish the file transmission.

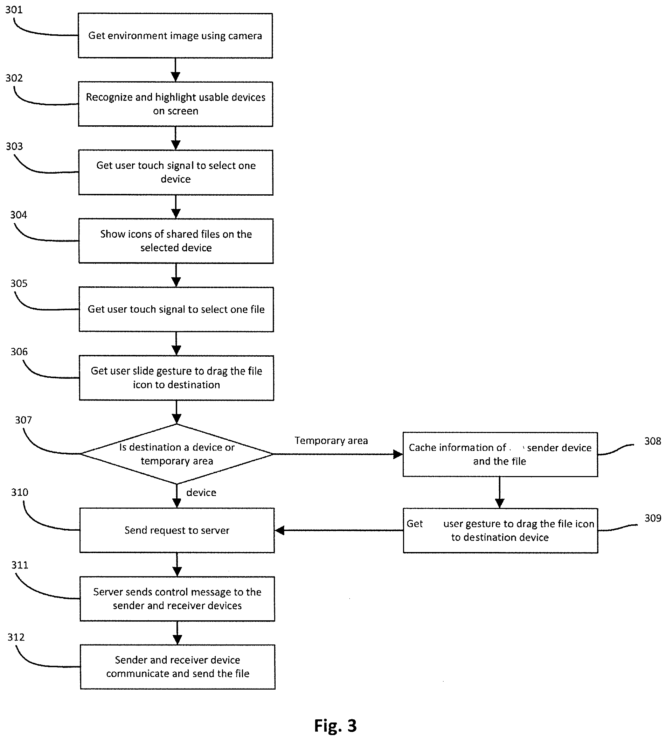

Referring to Fig. 3, the overall file selection and transmission procedure of the interactive method comprises the steps as outlined below.

In step 301, the program running on the portable smart device 12 uses its camera to obtain an image of the environment, in which some computational devices of interest are included.

In step 302, with the help of the server 13, which recognizes computational devices that have been registered in advance in the server 13, the portable smart device 12 highlights usable computational devices on its screen. A non-registered computational device, if any, will not be highlighted, even if the camera obtains an image of the device. Then in step 303, the portable smart device 12 receives a user touch signal to select one of the computational devices as the file source. The program running on the portable smart device 12 will show icons of shareable files around the selected computational device in step 304. An example screen image of the portable smart device by this step appears as Fig. 2.

As described above, when real world computational devices are recognized, some virtual highlights and file icons may be showed on the screen in a superimposed manner with their real image. This kind of information display method meets the definition of augmented reality, since virtual information is showed together with real image.

Alternatively, recognized computational devices and their files lists may be showed on the smart device's screen without the real image of the environment. In this case, augmented reality method is not involved.

Instead of a static image, live video (i.e. time-varying image) of the camera may be used to recognize computational devices. In this case, the highlights and icons will show upon the video which changes in time.

In step 305, the portable smart device 12 receives a user touch signal again, which is supposed to touch one icon of the files, to choose one file on the source computational device to be shared. Once the selection of file is made, the user is supposed to drag the file icon to a destination in step 306.

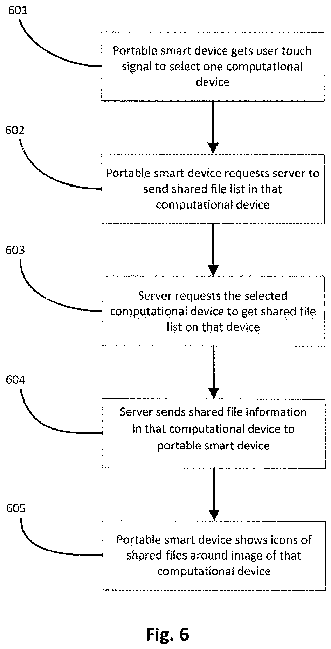

In step 307, the program (application 804) running on the portable smart device 12 makes a judgment whether the destination is a computational device icon 22 to 25, or the Temporary Area 27. If the destination is a computational device, then the procedure goes to step 310, in which the portable smart device 12 sends information of the sender computational device (i.e. device ID of the sender device, which however may be omitted), information of the selected file (i.e. file identifier of the selected file), and information of the destination device (i.e. device ID of the destination device) to the server 13 to make a file transfer request (which will be explained in more detail in connection with Fig.6). If the destination is the Temporary Area 27, the procedure goes to step 308, where the program running on the portable smart device 12 caches the above-mentioned information of the sender computational device and the selected file, and wait. Then in step 309, the portable smart device 12 receives a user slide gesture to drag the file icon to a destination device, and the procedure goes to step 310.

In step 311, the server 13 receives the file transfer request from the portable smart device 12, and then sends a control message to the source (sender) computational device and the destination (receiver) computational device.

In step 312, the sender computational device and the receiver computational device build up a network connection and finish the file transfer. For example, the connection may be wired or wireless.

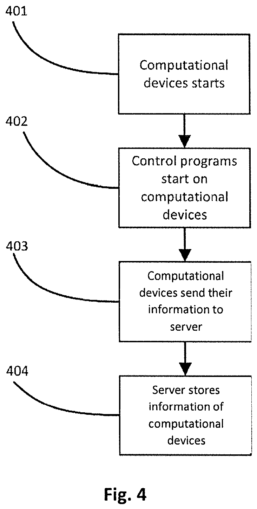

Referring to Fig. 4, the computational devices registration of the interactive method comprises the steps as outlined below.

In step 401, the user activates a computational device, and starts the control program (software 1204) on that computational device in step 402. The computational device may be activated automatically (e.g. by remote control). The control program may start automatically upon activation of the computational device.

In step 403, the control program of the computational device sends information of the computational device, including at least device ID and IP address, to the server 13. In one embodiment, the control program may recognize a file as shareable when the file is stored in a predetermined storage area (e.g. for desktop (GUI) of a computer) or the file is tagged with information indicating that the file is shareable. The information of the computational device may also include a port number of the device dedicated for transmitting and/or receiving a file.

In step 404, the server 13 receives the information sent by the computational device, and stores the information of the computational device in the storage module 903.

In one embodiment, the information of the computational device may be updated (i.e. logged) in the server 13. For example, IP address may dynamically change in time. For this purpose, once the computational device has been registered, the computational device and the server 13 may be connected periodically.

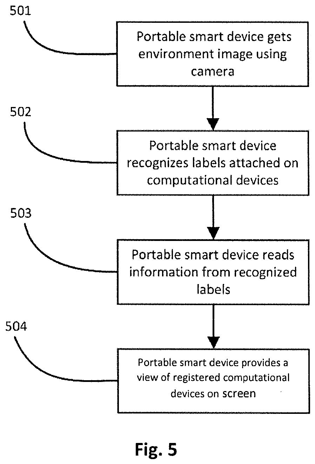

Referring to Fig. 5, the computational devices recognition and presentation of the interactive method comprise the steps as outlined below.

In step 501, the program (application 804) running on the portable smart device 12 obtains an environment image using its camera on the device. Then in step 502, the program recognizes labels attached on computational devices using an image-based recognition method, where the labels can be QR code ™ and other kinds of markers. As will be appreciated by those skilled in the art, the marking in the context of the present invention may not necessarily be those physically attached on computer devices. For example, the computational device may be configured such that upon activation of the device, a marking appears on its screen (e.g. at one corner). In the present invention, any type of markings may be used as long as they can be recognized by an image-based recognition method.

In step 503, the portable smart device 12 analyzes the labels and reads information recorded in them, including device IDs.

In step 504, the portable smart device 12 provides a view of registered computational devices on the screen, informing the user about the computational devices that can be selected to transfer files.

Alternatively, the label (broadly, marking) recognition program may be incorporated in the server 13. In this embodiment, the portable smart device 12 sends the environment image to the server 13. The server 13 analyzes the image to recognize any registered computational devices. The server 13 tags the computational devices with their coordinates in the image and device IDs, and sends the tag information to the portable smart device 12. Based on the tag information, the portable smart device 12 is able to recognize any registered computation devices and provides a view of them for subsequent procedures. As indicated above, frozen image(s) taken by the camera in step 501 may be used as the view of the computational devices for a subsequent selection procedure, instead of using icons for computation devices as shown in Fig. 2. In this case, it is preferable that the registered computational devices in the frozen image(s) are highlighted while any non-registered computational devices are not.

Referring to Fig. 6, the shareable file browsing of the interactive method comprises the steps as outlined below.

In step 601, the portable smart device 12 obtains a user touch signal to select one computational device, and then sends a request to the server 13 to get a list of shareable files in that computational device in step 602. The request includes device ID of the selected computational device. The list includes information of the shareable files, including identifiers of those files.

It is noted that the present invention is applicable to a case where the list includes only one file that is shareable.

In step 603, upon receipt of the request from the portable smart device 12, the server 13 requests the selected computational device to send the shareable file list on it. The server 13 sends the shareable file list back to the portable smart device 12 in step 604.

In step 605, upon receipt of the shareable file list on that computational device, the portable smart device 12 shows icons of the files in a manner so as to be associated with that computational device, for example, around an image of that computational device, as showed in Fig. 2. In another example, a popup window for file icons may appear in a superimposed manner, preferably close to the corresponding computational device.

An alternative way for the server 13 to get a list of shareable files is described as follows: upon registration of a computational device in the server 13, the computational device sends its shareable file list to the server 13, and the server 13 records the file list locally on its storage module 903. Each time the list of shareable files changes on the computational device, that computational device is responsible for informing the server 13 of a new shareable file list (or only identifier of a file to be added to the shareable file list and/or a file to be deleted from the list). The server 13 will update its local record of the shareable file list. In this case, each time the smart device 12 requests for the shareable file list of a computational device, the server 13 can infer its local record and send the shareable file list directly to the smart device (without the server 13 requesting the computational device to send back its shareable file list).

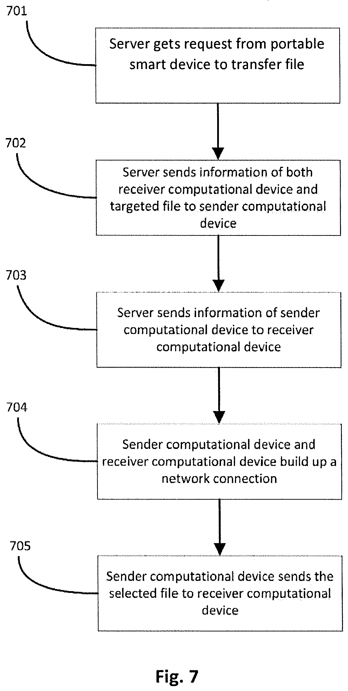

Referring to Fig. 7, the file transfer (transmission) of the interactive method comprises the steps as outlined below.

In step 701, the server 13 receives a request form the portable smart device 12, with information of a sender computational device (i.e. device ID), a file to be transferred (i.e. file identifier) and a receiver computational device (i.e. device ID), to transfer the file. The information of the sender computational device may be omitted. In the selection procedure of a file to be shared, the smart device 12 has already sent a request including device ID of the sender computational device (see step 602), and therefore the server 13 knows which one is the sender computational device.

In step 702, the server 13 sends information of both the receiver computational device (i.e. device ID and IP address) and the selected file to the sender computational device.

In step 703, the server sends information of the sender computational device (i.e. device ID and IP address) to the receiver computational device.

In step 704, the sender computational device and the receiver computational device build up a network connection on the basis of their IP addresses. For example, TCP socket can be used in this step to build up connection.

In step 705, the sender computational device sends the selected file to the receiver computational device.

While the present invention has been described in connection with certain preferred embodiments, it is to be understood that the subject-matter encompassed by the present invention is not limited to those specific embodiments. On the contrary, it is intended to include any alternatives and modifications within the scope of the appended claims.

## Claims

1. A method of operating an interactive system (1) to transfer files between two computational devices in a manner allowing a user to only use a smart device, the interactive system (1) including:
a server (13) which stores information of each of registered computational devices, including device ID and IP address, and, for each registered computational device that is configured to transmit files, a list of shareable files with their identifiers;
a smart device (12) with a camera and a touch screen for receiving users' input, the smart device (12) being connectable to the server (13), the smart device (12) comprising an image-based recognition application; and
computational devices for processing a file, wherein each registered computational device has a marking for image-based recognition indicating its device ID,
the method comprising:
(a) operating the camera of the smart device (12) to obtain at least one image of its environment to find marked computational devices;
(b) operating the image-based recognition application of the smart device (12) to recognize the registered computational devices inside a view of the camera to obtain device IDs by analyzing detected markings, and presenting a view of all the registered computational devices on the screen;
(c) causing the touch screen of the smart device (12) to receive a first touch signal from the user indicating a request to select one computational device as a sender device, and operating the smart device (12) to send device ID of the sender device to the server (13) for requesting a list of shareable files on that device;
(d) operating the server (13), upon receipt of the request from the smart device (12), to send the list together with an identifier of each file listed to the smart device (12);
(e) presenting a view of shareable files with icons in a manner so as to be associated with the selected computational device on the screen of the smart device (12);
(f) causing the touch screen of the smart device (12) to receive a second touch signal indicating which file the user intends to transfer, and receive a slide signal of dragging that icon to a computational device the user intends to transfer the file to as a receiver device;
(g) operating the smart device (12) to send a request comprising the device ID of the receiver device and a targeted file identifier to the server (13);
(h) operating the server (13), upon receipt of the smart device's request to send IP address of the receiver device as well as the targeted file identifier to the sender device, and send IP address of the sender device to the receiver device; and
(i) operating the sender device and the receiver device to build up a connection using the respectively received IP addresses and to transfer the file from the sender device to the receiver device.

2. The method of claim 1, further comprising the steps of:
storing, at the server (13), device ID of a computational device;
operating the computational device to connect to the server (13); and
sending device information of the computational device to the server (13), said device information including device ID and IP address of the computational device; and
registering said device information in a table of the server (13).

3. The method of claim 1 or 2, wherein the image-based recognition application is provided at the server (13), instead of at the smart device (12), and
instead of the step (b),
the smart device (12) sends the environment image to the server (13),
the server (13) analyzes the image to recognize any registered computational devices in the image, and
the server (13) sends device IDs of the registered computational devices to the smart device (12), so that the smart device (12) obtains the device IDs of the registered computational devices.

4. The method of any one of claims 1 to 3, wherein the receiver device is one of the following A-C:
A. a computer, which has the functionality of file storage and transmission with a controller installed;
B. a projector, which has the functionality of file display, wherein it opens and displays the received file;
C. a printer, which has the functionality of file printing, wherein it prints the received file.

5. The method of any one of claims 1 to 4, wherein said view at the step (b) is one or more frozen images obtained by the camera at the step (a), and
at the presenting step (e) the file icons are superimposed on at least one of the frozen image or images.

6. The method of any one of claims 1 to 5, further comprising the steps of:
presenting a view allowing the selected file icon to be dragged to an temporary area of the view, and
storing the file identifier of the file, with said icon being placed in the temporary area, in a cache of the smart device (12).

7. An interactive system (1) for transferring files between two computational devices in a manner allowing a user to only use a smart device (12), the interactive system (1) comprising:
a server (13) adapted to store information of each of registered computational devices, including device ID and IP address, and, for each registered computational device that is configured to transmit files, a list of shareable files with their identifiers;
a smart device (12) with a camera and a touch screen for receiving users' input, the smart device (12) being connectable to the server (13), the smart device (12) comprising an image-based recognition application; and
computational devices for processing a file, wherein each registered computational device has a marking for image-based recognition indicating its device ID,
wherein the smart device (12) is adapted
to obtain, with the camera, at least one image of its environment to find marked computational devices;
to recognize, with the image-based recognition application, the registered computational devices inside a view of the camera to obtain device IDs by analyzing detected markings, and present a view of all the registered computational devices on the screen;
to receive, via the touch screen, a first touch signal from the user indicating a request to select one computational device as a sender device; and
to send device ID of the sender device to the server for requesting a list of shareable files on that device;
wherein the server (13) is adapted, upon receipt of the request from the smart device (12), to send the list together with an identifier of each file listed to the smart device (12),
wherein the smart device (12) is further adapted
to present a view of shareable files with icons in a manner so as to be associated with the selected computational device on the screen;
to receive, via the touch screen, a second touch signal indicating which file the user intends to transfer, and receive a slide signal of dragging that icon to a computational device the user intends to transfer the file to as a receiver device; and
to send a request comprising the device ID of the receiver device and a targeted file identifier to the server (13),
wherein the server (13) is further adapted, upon receipt of the smart device's request, to send IP address of the receiver device as well as the targeted file identifier to the sender device, and send IP address of the sender device to the receiver device, and
wherein the sender device and the receiver device are adapted to build up a connection using the respectively received IP addresses and to transfer the file from the sender device to the receiver device.

## Patentansprüche

1. Verfahren zum Betreiben eines interaktiven Systems (1), um Dateien zwischen zwei Rechenvorrichtungen in einer Weise zu übertragen, die es einem Benutzer ermöglicht, nur eine intelligente Vorrichtung zu verwenden, wobei das interaktive System (1) aufweist:
einen Server (13), der Informationen aller registrierten Rechenvorrichtungen, einschließlich der Vorrichtungs-ID und IP-Adresse, und für jede registrierte Rechenvorrichtung, die konfiguriert ist, Dateien zu übertragen, eine Liste von gemeinsam nutzbaren Dateien mit ihren Kennungen speichert;
eine intelligente Vorrichtung (12) mit einer Kamera und einem Berührungsbildschirm zum Empfangen von Benutzereingaben, wobei die intelligente Vorrichtung (12) mit dem Server (13) verbindbar ist, wobei die intelligente Vorrichtung (12) eine bildbasierte Erkennungsanwendung aufweist; und
Rechenvorrichtungen zum Verarbeiten einer Datei, wobei jede registrierte Rechenvorrichtung eine Markierung zur bildbasierten Erkennung aufweist, die ihre Vorrichtungs-ID anzeigt, wobei das Verfahren aufweist:
(a) Betreiben der Kamera der intelligenten Vorrichtung (12), um mindestens ein Bild ihrer Umgebung zu erhalten, um markierte Rechenvorrichtungen zu finden;
(b) Betreiben der bildbasierten Erkennungsanwendung der intelligenten Vorrichtung (12), um die registrierten Rechenvorrichtungen innerhalb eines Gesichtsfelds der Kamera zu erkennen, um Vorrichtungs-IDs durch Analysieren ermittelter Markierungen zu erhalten, und Präsentieren einer Ansicht aller registrierten Rechenvorrichtungen auf dem Bildschirm;
(c) Bewirken, dass der Berührungsbildschirm der intelligenten Vorrichtung (12) ein erstes Berührungssignal vom Benutzer empfängt, das eine Anforderung anzeigt, eine Rechenvorrichtung als eine Sendevorrichtung auszuwählen, und Betreiben der intelligenten Vorrichtung (12), um die Vorrichtungs-ID der Sendevorrichtung zum Anfordern einer Liste von gemeinsam nutzbaren Dateien auf dieser Vorrichtung an den Server (13) zu senden;
(d) Betreiben des Servers (13), beim Empfang der Anforderung von der intelligenten Vorrichtung (12) die Liste zusammen mit einer Kennung jeder aufgelisteten Datei an die intelligente Vorrichtung (12) zu senden;
(e) Präsentieren einer Ansicht von gemeinsam nutzbaren Dateien mit Piktogrammen in einer solchen Weise, dass sie mit der ausgewählten Rechenvorrichtung auf dem Bildschirm der intelligenten Vorrichtung (12) verknüpft werden;
(f) Bewirken, dass der Berührungsbildschirm der intelligenten Vorrichtung (12) ein zweites Berührungssignal empfängt, das anzeigt, welche Datei der Benutzer zu übertragen beabsichtigt, und ein Verschiebungssignal des Ziehens dieses Piktogramms zu einer Rechenvorrichtung, zu der der Benutzer beabsichtigt, die Datei zu übertragen, als eine Empfangsvorrichtung zu empfangen;
(g) Betreiben der intelligenten Vorrichtung (12), um eine Anforderung, die die Vorrichtungs-ID der Empfangsvorrichtung und eine als Ziel gesetzte Dateikennung aufweist, an den Server (13) zu senden;
(h) Betreiben des Servers (13), beim Empfang der Anforderung der intelligenten Vorrichtung die IP-Adresse der Empfangsvorrichtung sowie die als Ziel gesetzte Dateikennung an die Sendevorrichtung zu senden, und die IP-Adresse der Sendevorrichtung an die Empfangsvorrichtung zu senden; und
(i) Betreiben der Sendevorrichtung und der Empfangsvorrichtung, eine Verbindung mittels der jeweiligen empfangenen IP-Adressen aufzubauen und die Datei von der Sendevorrichtung zur Empfangsvorrichtung zu übertragen.

2. Verfahren nach Anspruch 1, das ferner die Schritte aufweist:
Speichern auf dem Server (13) der Vorrichtungs-ID einer Rechenvorrichtung;
Betreiben der Rechenvorrichtung, um sich mit dem Server (13) zu verbinden; und
Senden von Vorrichtungsinformationen der Rechenvorrichtung an den Server (13), wobei die Vorrichtungsinformationen die Vorrichtungs-ID und IP-Adresse der Rechenvorrichtung aufweisen; und
Registrieren der Vorrichtungsinformationen in einer Tabelle des Servers (13).

3. Verfahren nach Anspruch 1 oder 2, wobei die bildbasierte Erkennungsanwendung auf dem Server (13) anstatt auf der intelligenten Vorrichtung (12) bereitgestellt wird, und anstatt des Schritts (b),
die intelligente Vorrichtung (12) das Umgebungsbild an den Server (13) sendet,
der Server (13) das Bild analysiert, um irgendwelche registrierten Rechenvorrichtungen im Bild zu erkennen, und
der Server (13) die Vorrichtungs-IDs der registrierten Rechenvorrichtungen an die intelligente Vorrichtung (12) sendet, so dass die intelligente Vorrichtung (12) die Vorrichtungs-IDs der registrierten Rechenvorrichtungen erhält.

4. Verfahren nach einem der Ansprüche 1 bis 3, wobei die Empfangsvorrichtung irgendeine der folgenden A-C ist:
A. ein Computer, der die Funktionalität einer Dateispeicherung und Übertragung aufweist, mit einem eingebauten Controller;
B. ein Projektor, der die Funktionalität einer Dateianzeige aufweist, wobei er die empfangene Datei öffnet und anzeigt;
C. ein Drucker, der die Funktionalität eines Dateidrucks aufweist, wobei er die empfangene Datei druckt.

5. Verfahren nach einem der Ansprüche 1 bis 4, wobei die Ansicht im Schritt (b) aus einem oder mehreren Standbildern besteht, die durch die Kamera im Schritt (a) erhalten werden, und
im Präsentationsschritt (e) die Dateipiktogramme auf mindestens eines der Standbilder überlagert werden.

6. Verfahren nach einem der Ansprüche 1 bis 5, das ferner die Schritte aufweist:
Präsentieren einer Ansicht, die es ermöglicht, das ausgewählte Dateipiktogramm auf einen vorübergehenden Bereich der Ansicht zu ziehen, und
Speichern der Dateikennung der Datei, wobei das Piktogramm im vorübergehenden Bereich angeordnet ist, in einem Cache der intelligenten Vorrichtung (12).

7. Interaktives System (1) zum Übertragen von Dateien zwischen zwei Rechenvorrichtungen in einer Weise, die es einem Benutzer ermöglicht, nur eine intelligente Vorrichtung (12) zu verwenden, wobei das interaktive System (1) aufweist:
einen Server (13), der eingerichtet ist, Informationen aller registrierten Rechenvorrichtungen, einschließlich der Vorrichtungs-ID und IP-Adresse, und für jede registrierte Rechenvorrichtung, die konfiguriert ist, Dateien zu übertragen, eine Liste von gemeinsam nutzbaren Dateien mit ihren Kennungen zu speichern;
eine intelligente Vorrichtung (12) mit einer Kamera und einem Berührungsbildschirm zum Empfangen von Benutzereingaben, wobei die intelligente Vorrichtung (12) mit dem Server (13) verbindbar ist, wobei die intelligente Vorrichtung (12) eine bildbasierte Erkennungsanwendung aufweist; und
Rechenvorrichtungen zum Verarbeiten einer Datei, wobei jede registrierte Rechenvorrichtung eine Markierung zur bildbasierten Erkennung aufweist, die ihre Vorrichtungs-ID anzeigt,
wobei die intelligente Vorrichtung (12) eingerichtet ist:
mit der Kamera mindestens ein Bild ihrer Umgebung zu erhalten, um markierte Rechenvorrichtungen zu finden;
mit der bildbasierten Erkennungsanwendung die registrierten Rechenvorrichtungen innerhalb eines Gesichtsfelds der Kamera zu erkennen, um Vorrichtungs-IDs durch Analysieren ermittelter Markierungen zu erhalten, und eine Ansicht aller registrierten Rechenvorrichtungen auf dem Bildschirm zu präsentieren;
über den Berührungsbildschirm eine erstes Berührungssignal vom Benutzer zu empfangen, das eine Anforderung anzeigt, eine Rechenvorrichtung als eine Sendevorrichtung auszuwählen; und
die Vorrichtungs-ID der Sendevorrichtung zum Anfordern einer Liste von gemeinsam nutzbaren Dateien auf dieser Vorrichtung an den Server zu senden;
wobei der Server (13) eingerichtet ist, beim Empfang der Anforderung von der intelligenten Vorrichtung (12) die Liste zusammen mit einer Kennung jeder aufgelisteten Datei an die intelligente Vorrichtung (12) zu senden,
wobei die intelligente Vorrichtung (12) ferner eingerichtet ist:
eine Ansicht von gemeinsam nutzbaren Dateien mit Piktogrammen in einer solchen Weise zu präsentieren, dass sie mit der ausgewählten Rechenvorrichtung auf dem Bildschirm verknüpft werden;
über den Berührungsbildschirm ein zweites Berührungssignal zu empfangen, das anzeigt, welche Datei der Benutzer zu übertragen beabsichtigt, und ein Verschiebungssignal des Ziehens dieses Piktogramms zu einer Rechenvorrichtung, zu der der Benutzer beabsichtigt, die Datei zu übertragen, als eine Empfangsvorrichtung zu empfangen; und eine Anforderung, die die Vorrichtungs-ID der Empfangsvorrichtung und eine als Ziel gesetzte Dateikennung aufweist, an den Server (13) zu senden,
wobei der Server (13) ferner eingerichtet ist, beim Empfang der Anforderung der intelligenten Vorrichtung die IP-Adresse der Empfangsvorrichtung sowie die als Ziel gesetzte Dateikennung an die Sendevorrichtung zu senden, und die IP-Adresse der Sendevorrichtung an die Empfangsvorrichtung zu senden, und
wobei die Sendevorrichtung und die Empfangsvorrichtung eingerichtet sind, eine Verbindung mittels der jeweiligen empfangenen IP-Adressen aufzubauen und die Datei von der Sendevorrichtung zur Empfangsvorrichtung zu übertragen.

## Revendications

1. Procédé de fonctionnement d'un système interactif (1) pour le transfert de fichiers entre deux dispositifs informatiques de manière à ne permettre que l'utilisation d'un dispositif intelligent par un utilisateur, ledit système interactif (1) comprenant :
un serveur (13) stockant des informations de chacun des dispositifs informatiques enregistrés, comprenant ID de dispositif et adresse IP, et, pour chaque dispositif informatique enregistré prévu pour transmettre des fichiers, une liste de fichiers partageables avec leurs identifiants ;
un dispositif intelligent (12) avec une caméra et un écran tactile pour la réception d'une entrée d'utilisateur, le dispositif intelligent (12) pouvant être connecté au serveur (13), le dispositif intelligent (12) comprenant une application de reconnaissance basée sur une image ; et
des dispositifs informatiques pour le traitement d'un fichier, chaque dispositif informatique enregistré étant pourvu d'un repère pour une reconnaissance basée sur une image indiquant son ID de dispositif,
ledit procédé comprenant :
(a) la mise en service de la caméra du dispositif intelligent (12) pour obtenir au moins une image de son environnement afin de trouver des dispositifs informatiques pourvus de repères ;
(b) l'activation de l'application de reconnaissance basée sur une image du dispositif intelligent (12) pour reconnaître les dispositifs informatiques enregistrés à l'intérieur d'une vue de la caméra afin d'obtenir des ID de dispositif par analyses des repères détectés, et présentation d'une vue de tous les dispositifs informatiques enregistrés sur l'écran ;
(c) le déclenchement de la réception par l'écran tactile du dispositif intelligent (12) d'un premier signal tactile de l'utilisateur indiquant une demande de sélection d'un dispositif informatique en tant que dispositif émetteur, et activation du dispositif intelligent (12) pour transmettre l'ID de dispositif du dispositif émetteur au serveur (13) afin de demander une liste de fichiers partageables sur ledit dispositif ;
(d) l' actionnement du serveur (13), à la réception de la demande du dispositif intelligent (12), pour transmettre la liste avec un identifiant de chaque fichier listé au dispositif intelligent (12) ;
(e) la présentation d'une vue de fichiers partageables avec des icônes de manière permettant l'association au dispositif informatique sélectionné sur l'écran du dispositif intelligent (12) ;
(f) le déclenchement de la réception par l'écran tactile du dispositif intelligent (12) d'un deuxième signal tactile indiquant quel fichier l'utilisateur à l'intention de transférer, et de la réception d'un signal de glissement d'une icône vers un dispositif informatique vers lequel l'utilisateur à l'intention de transférer le fichier en tant que dispositif récepteur ;
(g) l'activation du dispositif intelligent (12) pour transmettre au serveur (13) une demande comprenant l'ID de dispositif du dispositif récepteur et un identifiant de fichier cible ;
(h) l'activation du serveur (13), à la réception de la demande du dispositif intelligent, pour transmettre au dispositif émetteur l'adresse IP du dispositif récepteur ainsi que l'identifiant de fichier cible, et transmettre l'adresse IP du dispositif émetteur au dispositif récepteur ; et
(i) l'activation du dispositif émetteur et du dispositif récepteur pour établir une connexion au moyen des adresses IP respectivement reçues, et pour transférer le fichier du dispositif émetteur vers le dispositif récepteur.

2. Procédé selon la revendication 1, comprenant en outre les étapes suivantes :
mémorisation, sur le serveur (13), de l'ID de dispositif d'un dispositif informatique ;
activation du dispositif informatique pour se connecter au serveur (13) ; et
transmission d'informations de dispositif du dispositif informatique au serveur (13), les informations de dispositif comprenant l'ID de dispositif et l'adresse IP du dispositif informatique ; et
l'enregistrement desdites informations de dispositif dans une table du serveur (13).

3. Procédé selon la revendication 1 ou la revendication 2, où l'application de reconnaissance basée sur une image est prévue sur le serveur (13) au lieu du dispositif intelligent (12), et où,
à la place de l'étape (b),
le dispositif intelligent (12) transmet l'image d'environnement au serveur (13),
le serveur (13) analyse l'image pour reconnaître tout dispositif informatique enregistré dans l'image, et
le serveur (13) transmet les ID de dispositif des dispositifs informatiques enregistrés au dispositif intelligent (12), si bien que le dispositif intelligent (12) obtient les ID de dispositif des dispositifs informatiques enregistrés.

4. Procédé selon l'une des revendications 1 à 3, où le dispositif récepteur est l'un des dispositifs A à C suivants :
A. un ordinateur, pourvu d'une fonctionnalité de stockage et de transmission de fichier avec un contrôleur installé ;
B. un projecteur, pourvu d'une fonctionnalité d'affichage de fichier, où il ouvre et affiche le fichier reçu ;
C. une imprimante, pourvue d'une fonctionnalité d'impression de fichier, où elle imprime le fichier reçu.

5. Procédé selon l'une des revendications 1 à 4, où la vue de l'étape (b) est une ou plusieurs images figées obtenues par la caméra lors de l'étape (a), et
lors de l'étape de présentation (e), les icônes de fichiers sont superposées sur au moins une image figée.

6. Procédé selon l'une des revendications 1 à 5, comprenant en outre les étapes de :
présentation d'une vue permettant à l'icône de fichier sélectionnée d'être tirée vers une surface temporaire de la vue, et
mémorisation de l'identifiant du fichier, l'icône étant placée dans la surface temporaire, dans un cache du dispositif intelligent (12).

7. Système interactif (1) pour le transfert de fichiers entre deux dispositifs informatiques de manière à ne permettre que l'utilisation d'un dispositif intelligent (12) par un utilisateur, ledit système interactif (1) comprenant :
un serveur (13) prévu pour stocker des informations de chacun des dispositifs informatiques enregistrés, comprenant ID de dispositif et adresse IP, et, pour chaque dispositif informatique enregistré prévu pour transmettre des fichiers, une liste de fichiers partageables avec leurs identifiants ;
un dispositif intelligent (12) avec une caméra et un écran tactile pour la réception d'une entrée d'utilisateur, le dispositif intelligent (12) pouvant être connecté au serveur (13), le dispositif intelligent (12) comprenant une application de reconnaissance basée sur une image ; et
des dispositifs informatiques pour le traitement d'un fichier, chaque dispositif informatique enregistré étant pourvu d'un repère pour une reconnaissance basée sur une image indiquant son ID de dispositif,
où le dispositif intelligent (12) est prévu
pour obtenir avec la caméra, au moins une image de son environnement afin de trouver des dispositifs informatiques pourvus de repères ;
pour reconnaître avec l'application de reconnaissance basée sur une image, les dispositifs informatiques enregistrés à l'intérieur d'une vue de la caméra afin d'obtenir des ID de dispositif par analyses des repères détectés, et présenter une vue de tous les dispositifs informatiques enregistrés sur l'écran ;
pour recevoir, via l'écran tactile, un premier signal tactile de l'utilisateur indiquant une demande de sélection d'un dispositif informatique en tant que dispositif émetteur ; et
pour transmettre l'ID de dispositif du dispositif émetteur au serveur afin de demander une liste de fichiers partageables sur ledit dispositif ;
le serveur (13) étant prévu pour, à la réception de la demande du dispositif intelligent (12), transmettre la liste avec un identifiant de chaque fichier listé au dispositif intelligent (12),
le dispositif intelligent (12) étant en outre prévu
pour présenter une vue de fichiers partageables avec des icônes de manière permettant l'association au dispositif informatique sélectionné sur l'écran ;
pour recevoir, via l'écran tactile, un deuxième signal tactile indiquant quel fichier l'utilisateur à l'intention de transférer, et recevoir un signal de glissement d'une icône vers un dispositif informatique vers lequel l'utilisateur à l'intention de transférer le fichier en tant que dispositif récepteur ; et
pour transmettre au serveur (13) une demande comprenant l'ID de dispositif du dispositif récepteur et un identifiant de fichier cible,
où le serveur (13) est en outre prévu pour, à la réception de la demande du dispositif intelligent, transmettre au dispositif émetteur l'adresse IP du dispositif récepteur ainsi que l'identifiant de fichier cible, et transmettre l'adresse IP du dispositif émetteur au dispositif récepteur, et
où le dispositif émetteur et le dispositif récepteur sont prévus pour établir une connexion au moyen des adresses IP respectivement reçues, et pour transférer le fichier du dispositif émetteur vers le dispositif récepteur.
